# EUROPEAN PATENT SPECIFICATION

(11) **EP 3 564 565 B1**
(45) Date of publication and mention of the grant of the patent: **03.08.2022**
(21) Application number: 18170422.2
(22) Date of filing: 02.05.2018
(51) Int. Cl.: F16L 3/233, G09F 3/20, H02G 1/00

(54) **BISTABLE AUTOMATIC CABLE WRAP**
BISTABILE AUTOMATISCHE KABELUMHÜLLUNG
EMBALLAGE AUTOMATIQUE DE CÂBLE BISTABLE

(43) Date of publication of application: 06.11.2019
(73) Proprietor: Tyco Electronics UK Ltd, Wiltshire SN3 5HH (GB)
(72) Inventor: APPELLO, Mario, Baydon, Marlborough, Wiltshire SN8 2JQ (GB)
(74) Representative: Grünecker Patent- und Rechtsanwälte PartG mbB

(56) References cited:
- WO-A1-90/10331
- CN-U- 205 396 976
- GB-A- 2 169 456
- US-A1- 2015 332 614
- UT Wire: "Speedy Wrap", Youtube, 3 June 2015 (2015-06-03), page 1 pp., XP054978764, Retrieved from the Internet: URL:https://www.youtube.com/watch?v=nig8Fw vyRQ8 [retrieved on 2018-10-09]
- Panduit: "Cable Ties Product Selection Guide", , 31 December 2017 (2017-12-31), XP055513697, Retrieved from the Internet: URL:http://www.panduit.com/heiler/Selectio nGuides/D-CTSG04--SA-ENG-CableTiesProduct- W.pdf [retrieved on 2018-10-09]
- Prweb: "Cable slap", , 25 October 2012 (2012-10-25), XP055770186, Retrieved from the Internet: URL:https://www.prweb.com/pdfdownload/1005 2569.pdf [retrieved on 2021-01-29]

## Description

The invention relates to a bistable automatic cable wrap for being wrapped around a cable or wire. The invention further relates to a kit comprising a plurality of cable wraps and an assembly comprising at least one cable or wire and a cable wrap.

Furthermore, the invention relates to the use of a cable wrap for at least one of wrapping, marking and patching at least one cable or wire.

Cable wraps are known in the art. The prior art solutions are widely applied to temporarily or permanently provide a cable marker that allows the type and/or functionality of the marked cable to be indicated. Furthermore, cable repair patches are also known, which allow damaged cable insulation to be repaired.

The feature that these solutions of the art have in common is that they require a sequence of steps for their application. The application requires skilled handling by the user and is time-consuming.

A bistable cable wrap is shown in https://www.youtube.com/watch?v=nig8FwvyRQ8, wherein the "speedy wrap" shown therein may be applied several times, is available in different sizes and is provided with magnetic locking. In the "Cable Ties Product Selection Guide" of Panduit, a multitude of different cable ties is disclosed. CN 205 396 976 U discloses a well-known cable tie with a ratchet structure. The elongated part of the cable tie has a layer of adhesive provided on the outside of the cable tie. WO 90/10331 A1 discloses cable splice protection for environmental protection, in which a dimensionally recoverable sleeve that shrinks upon application of heating is applied. Another bistable cable wrap is shown on the website https://www.prweb.com/pdfdownload/10052569.pdf, which concerns a cableslap. The cableslap distinguishes from the "speedy wrap" by not comprising a magnet but a solid steel bistable spring core. In GB 2 169 456 A, a laminated wrap for repairing an electrical cable is shown. Longitudinal sides of the wrap overlap and an inner adhesive layer is provided that adheres to the surface of the cable.

An object of the present invention is therefore to provide a cable wrap which allow for easy, fast and accurate installation whilst ensuring the reproducibly high quality of the installation.

This object is solved according to the invention by a bistable automatic cable wrap having a stable extended state in which it extends essentially along a longitudinal direction, wherein the bistable automatic cable wrap automatically adopts a stable wound state if deformed in the extended state, wherein the bistable automatic cable wrap comprises a front side and a back side and wherein the back side of the cable wrap is located inside a circle / a cylinder, which is formed by the cable wrap, wherein an adhesive material is provided at the back side of the bistable automatic cable wrap, and wherein the adhesive material is an adhesive repair material, which is configured to bond chemically and/or physically with cable insulation.

The kit mentioned in the beginning solves the above object by comprising a plurality of automatic bistable cable wraps, wherein the cable wraps have different lengths and/or widths.

The assembly mentioned in the beginning solves the above object by providing at least one bistable automatic cable wrap, which is wound around the at least one cable or wire and wherein the length of the cable wrap corresponds at least to the circumference of the assembly.

Finally, the above object is solved by using a bistable automatic cable wrap according to claim 1.

The inventive bistable automatic cable wrap (henceforth abbreviated to: cable wrap), therefore have the advantage of an easier and faster installation which does not require additional means for fixing the cable wrap prior to reaching a final installation position. The ease of use furthermore reduces the risk of a faulty or incomplete installation of the cable wrap. The inventive solutions furthermore have the advantage that they are self-aligning during application and do not need to be held in place when being installed. Furthermore, the inventive solutions as less craft-sensitive when being installed. Additionally, no clamp or tape is needed to hold the inventive cable wrap in place as it automatically self-winds around a cable or wire and holds itself in place.

In the following, further embodiments of the present invention will be described. Each of the embodiments is advantageous on its own, and technical features of the embodiments may be arbitrarily combined with each other or omitted if the technical effect obtained by the omitted technical feature is not essential to the invention.

In certain technical fields, e.g. in the railroad industry, there is a need for reliable cable markers which allow for repositioning of the marker. It is desired that a label indicating the type and/or functionality of the marked cable faces towards the user. If this orientation is not set after the installation of the inventive cable wrap, it may easily be relocated along an extension of the cable or rotated around the extension of the cable in order to obtain the desired position.

According to the invention, the cable wrap is stable in at least two states: the extended state and the wound state. The cable wrap may comprise further states, such as an intermediate state which is obtained when the cable wrap adopts one of the extended state or the wound state. Such an intermediate state may in particular be unstable, i.e. in such an unstable state the cable wrap automatically adopts either the extended state or the wound state. The extended state may be considered a metastable state, in which a disturbance having energy smaller than the potential energy of said metastable state will change the cable wrap's state into the wound state. Contrary to the metastable extended state, the wound state may be considered the state of least energy of the bistable automatic cable wrap.

The inventive bistable automatic cable wrap may be wrapped around a cable or wire of any arbitrary shape or diameter, wherein most preferably the cable wrap is adapted to be wrapped around a circular wire or cable. Such circular wires or cables are commonly used.

A deformation of the cable wrap, as required to automatically adopt the stable wound state, may be understood as a force exerted on the cable wrap, in particular to deform at least a portion, e.g. a trigger portion or surface, thereof. Upon deformation, the bistable automatic cable wrap starts to coil up. It is preferred that such a deformation may be applied repetitively. Such an embodiment of the inventive cable wrap is reusable.

In the wound state, the diameter of the wound cable wrap may be defined by the cable or wire around which the cable wrap is attachable.

In the wound state the cable wrap may exert a force on a cable or wire to which it is attachable, wherein said force is directed radially inwards. In certain applications, the cable wrap may have a minimum diameter which equals the outer diameter of the cable or wire. The minimum diameter corresponds to the diameter which is obtained if the cable wrap is wound without a cable or wire.

The cable wrap may be a monolithic piece or may comprise overlapping and/or woven portions that comprise the above-described two stable states.

In the wound state, the cable wrap may at least partially encircle a trigger portion. Such a trigger portion may be provided at the back side of the cable wrap. In the wound state, the back side of the cable wrap is located inside the circle/cylinder which is formed by the cable wrap.

The cable wrap may, at least in the extended state, have a U-shaped profile if cut along a plane oriented essentially perpendicular to the longitudinal direction. Such a U-shaped profile may invert its curvature when it adopts the wound state.

In another embodiment, the cable wrap may, at least in the extended state, have an angled shape if cut along a plane oriented essentially perpendicular to the longitudinal direction. Such an angled shape may comprise a straight, i.e. linear, flat base and straight and also linear wing portions extending from the flat base at an angle. Preferably, the wing portions extend towards the same side of the flat base. Further shapes with a plurality of edges and/or curved portions are conceivable, wherein all said embodiments may have in common that one side is essentially concave, while the opposite side is essentially convex.

In a further embodiment of the inventive cable wrap, an indication member on the front side of the cable wrap is comprised for labeling the cable or wire around which the cable wrap is attachable. Such an indication member may comprise an illuminating material and/or a fluorescent material.

The indication member provided at the cable wrap may cover only a part of the cable wrap, preferably a central part, wherein, in different embodiments, the indication member may cover an entire side of the cable wrap.

For certain methods for printing the bistable automatic cable wrap, no further requirements regarding the surface may be necessary, e.g. in the case of laser printing.

In a further embodiment of the inventive automatic cable wrap, the indication member may comprise at least one of:
- a homogenously smooth surface;
- a preparation coating which is adhesively attached to the indication member and which provides a higher adhesion to liquid inks than non-porous materials of the bistable automatic cable wrap; or
- a layer of writing or printing substrate which is adhesively fixed to the indication member for absorbing water-based or acrylic inks.

A homogenously smooth surface is to be understood as a surface of the bistable automatic cable wrap which may still comprise a surface roughness, wherein the roughness as well as the structure of the surface are isotropic, i.e. uniform in all directions along the surface. Such a homogenously smooth surface may, for instance, be used for laser marking which applies a laser beam, as well as for continuous inkjet printing. In the latter method, the ink is deposited at a high velocity and neither marking technique requires a mechanical contact with the bistable automatic cable wrap. Thus, the bistable automatic cable wrap may be of any thickness and the corresponding surface of the indication member may also be rough.

The preparation coating may be understood as a liquid or gel which may be applied to the surface of the indication member and which bonds to the indication member by means of physical and/or mechanical processes. The preparation coating may furthermore comprise a surface structure which provides a sufficient hardness so as not to be easily removed by friction, while at the same time providing a flexible surface. The coating is preferably water resistant and adapted for absorbing acrylic or water-based inks.

The printing or writing substrate is to be understood as an additional layer of material which is fixed, e.g. by an adhesive, to the indication member and which provides a surface structure suitable for printing or writing. The corresponding substrate may be made of paper or a material comprising natural fibers, e.g. wood. It may be embodied as an adhesive label or sticker.

A bistable automatic cable wrap with such a printing or writing substrate may be adapted so that it is printable using an inkjet or laser printer, in particular a roll-to-roll inkjet label printer.

Preferably, thermal transfer printers may be applied to print or write onto a homogenously smooth surface of the indication member. In such thermal transfer printers, the bistable automatic cable wrap may be compressed during the printing operation which is carried out under an applied pressure.

In a further embodiment, at least the front side of the cable wrap is essentially flat for printing on the indication member in the extended state of the cable wrap.

Such an essentially flat front side facilitates the printing of a label on the indication member using known printers. Other techniques, such as etching, engraving and the like, may also be applied for labeling the indication member.

Thus, the area available for printing and/or labeling the indication member may solely be limited by the indication member itself. As described above, printing and/or labeling may therefore be performed in only a part of the cable wrap, preferably a central part, or over an entire side of the inventive cable wrap if the indication member is embodied as such. If the previously described bistable automatic cable wrap has an angled shape, the indication member is preferably positioned at or on the flat base.

In another embodiment, the bistable automatic cable wrap may have a material thickness between 0.1 and 0.7mm.

In another embodiment, a thickness of the cable wrap may be between 0.7mm and 1.0mm, or even more than 1.0mm.

The material thickness of 0.1 to 0.7mm of the above-described embodiment of the bistable automatic cable wrap therefore easily allows the slightly curved cable wrap to be compressed during printing. This may be preferably done during a process step of thermal transfer printing, but may also be applied in conventional inkjet or laser printers.An according embodiment of the inventive kit may arrange the cable wraps of different lengths and/or widths in a matrix similar to a sheet. The cable wraps may be supported by each other by means of supporting bars and by means of a surrounding frame. Such a kit may preferably be adapted to allow printing in a common printer.

For ease of printing, it is preferable if the cable wraps are aligned in the same direction as the flat sheet. The cable wraps may also be provided in the form of a roll product for roll-to-roll printing.

In a further embodiment of the inventive cable wrap, the extended and wound state are each repetitively and reversibly adoptable for applying the cable wrap as a reusable cable marker.

The inventive cable wrap may be made of a metal and/or a polymer. In particular, the metal version of the inventive cable wrap allows for repetitively adopting the extended state and/or the wound state.

In the wound state, the inventive cable wrap may be coiled at most two turns about the cable.

In the according inventive assembly, the cable wrap is wound around the at least one cable or wire such that the length of the cable wrap corresponds at least to the circumference of the assembly and at most two times to three times the circumference. The circumference is to be understood as the length of the path along the outer contour of the cable or wire which is to be provided with the cable wrap. In the particular case of a round cable or wire, said diameter corresponds to a circle diameter.

The length of the cable wrap may be limited by choosing a cable wrap from the kit having an appropriate length. By choosing an appropriate length, limiting the cable wrap to at most two turns about the cable, excess material may be reduced and the assembly may not become larger than the space in which it is installed, even though the necessary space is increased by the cable wrap which is wound around the cable or wire.

In a further embodiment of the inventive cable wrap, the back side of the cable wrap has a surface increasing the friction between the cable wrap and the wire or cable. Such an embodiment has the advantage that the cable wrap may be temporarily fixed to the wire or cable, wherein the frictional engagement between cable wrap and cable may be disengaged for relocating and/or rotating the cable wrap with respect to the cable or wire.

The surface that increases friction may comprise a partially elastic cover member which may be provided at the back side of the cable wrap and/or at the edges of the cable wrap, wherein said edges extend along the longitudinal direction in the extended state.

The back side of the cable wrap provides an adhesive material. The adhesive material may in particular be a hot melt adhesive or pressure-sensitive adhesive. Such an embodiment of the cable wrap may be used for permanent wrapping or marking of at least one cable or wire. By means of the automatic wrapping of the inventive cable wrap, insufficient contact between the cable wrap and the cable or wire is prevented by gluing the cable wrap to the cable or wire. The self-aligning feature of the inventive cable wrap is particularly advantageous when providing an adhesive material as the cable wrap does not need to be held in place during installation to a cable or wire, in particular if a hot melt or pressure-sensitive adhesive is applied. The user may therefore attach the cable wrap to the cable or wire which subsequently holds itself in place such that the user may freely operate a heat source or pressure source for permanently attaching the cable wrap to the cable or wire.

The inventive cable wrap comprising an adhesive material may consequently be used for permanently marking the at least one cable or wire.

If the cable wrap is used for patching at least one cable or wire, the corresponding inventive cable wrap comprises an adhesive material which is an adhesive repair material. Such an adhesive repair material may be configured to bond chemically and/or physically with cable insulation. Such repair patches are known, wherein prior art solutions require manual fixation of the repair patch prior to the repair step. Such manual fixation may be performed by the user or by applying a further adhesive tape fixing the repair patch. The repair process may comprise the application of heat. The inventive repair patch, however, automatically wraps around the wire or cable that is to be repaired and remains at the position in which it has been applied, such that the process step of repairing the cable or wire insulation may be started directly without the need for additional fixation of the repair patch.

A cable wrap used for patching the at least one cable or wire is by definition a permanent wrapping of the corresponding cable wrap.

In the inventive assembly, at least one of the list of the following connections may be formed between the at least one wire or cable and the cable wrap:
- a waterproof connection;
- an electrically isolating connection;
- a self laminating connection; and
- a self-adhesive connection.

The above connections may be present in an arbitrary combination, such that, exemplarily, a laminating connection may be waterproof or an adhesive connection may be electrically isolating.

In the following, the invention will be described by way of example using the accompanying figures. Individual technical features of the embodiments shown may be arbitrarily combined with each other or omitted. The embodiments shown in the figures are purely exemplary. Similar technical features and technical features having the same technical effect will be denoted using the same reference numeral. A repetitive description will be avoided, whereby differences between different embodiments will be explicitly detailed
- Fig. 1a and Fig. 1b: a first embodiment of the inventive cable wrap in the extended state;
- Fig. 2a and Fig. 2b: the cable wrap of Figs. 1a and 1b in a wound state;
- Fig. 3a, Fig. 3b and Fig. 3c: exemplary assemblies and applications of the inventive cable wrap;
- Fig. 4a and Fig. 4b: a second and third embodiment of the inventive cable wrap;
- Fig. 5a and Fig. 5b: cross-section of the cable wrap of Fig. 4b and of a fourth embodiment of the inventive cable wrap;
- Fig. 6a and Fig. 6b: two process steps for applying the cable wrap to a cable or wire for obtaining an assembly;
- Fig. 7: a kit according to the invention;
- Figs. 8 to 10: illustration of possible embodiments of the indication member for printing or writing; and
- Fig. 11: another embodiment of the inventive kit.

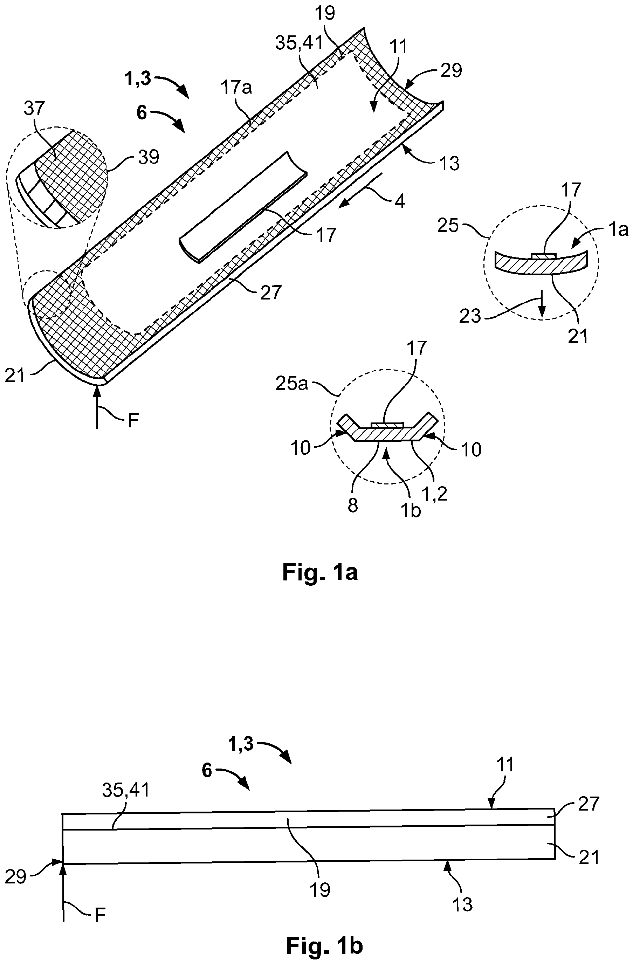

In each of Figs. 1a, 1b, 2a, 2b, 3a and 3b, a bistable automatic cable wrap 1 according to the invention is shown. In Figs. 1a and 1b, the cable wrap 1 is shown in an extended state 3 in a perspective view (Fig. 1a) and a side view (Fig. 1b). In the extended state 3, the cable wrap 1 extends in a longitudinal direction 4.

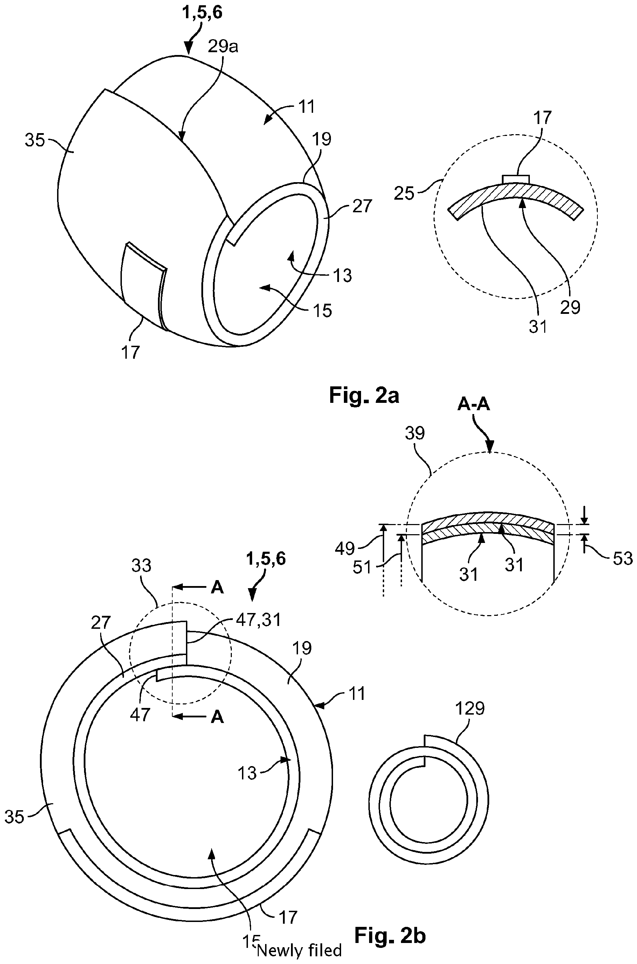

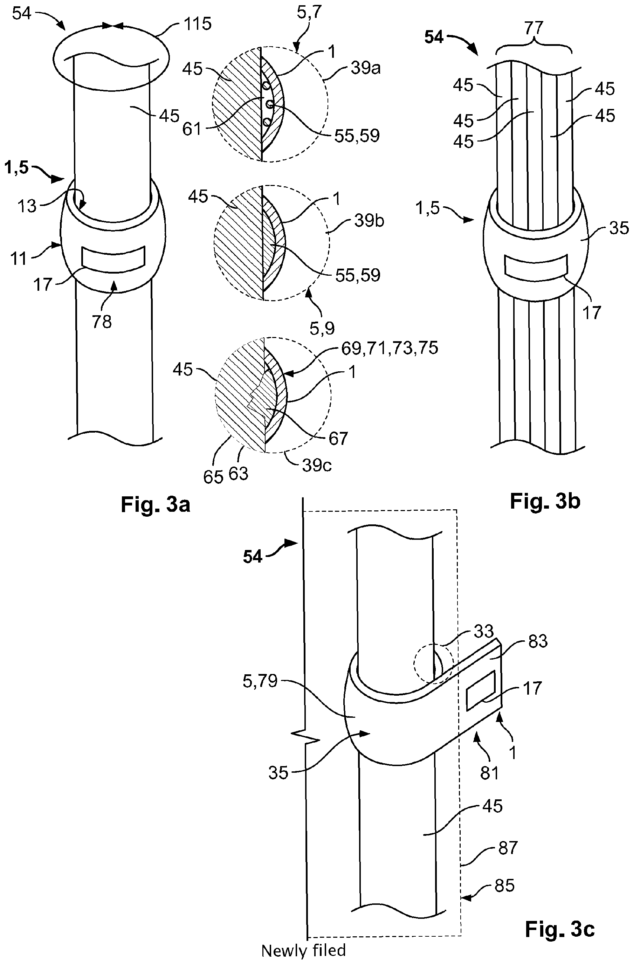

In Figs. 2a, 2b, 3a and 3b the cable wrap 1 is shown in a wound state 5. The wound state 5 may correspond to a pre-assembled state 7 or to an assembled state 9. The latter two will be described below in a more detailed description of Figs. 3a-3c.

Turning to Fig. 1a, 1b, 2a and 2b, the figures show a solid cable wrap 1 which is embodied monolithically. The cable wrap 1 comprises a front side 11 and a back side 13, wherein in the wound state 5 the back side 13 faces towards an encircled volume 15. In different embodiments of the inventive cable wrap 1, a body 35 of the cable wrap 1 may have a structured body 37 as shown in circle 39. In the embodiment shown in the figures, the body 35 is made of a metal 41. The cable wrap 1 may, however, be made of a polymer 43. The inventive cable wraps 1 made of a polymer 43 are preferably adapted to be non-repetitively used for marking a cable or wire 45, whereas a cable wrap 1 according to the invention that is intended for repetitive use is preferably made of metal 41.

The front side 11 comprises an indication member 17. In Fig. 1a, a second embodiment of the indication member 17a is indicated with a dashed line. The indication member 17 may be provided in different sizes and may cover the entire cable wrap 1.

The cable wrap 1 of the embodiment shown is made of a sheet metal 19 which may be pretensioned, such that, in the extended state 3, a convex portion 21 is provided which extends away from the front side 11 in a height direction 23 away from side edges 27 of the cable wrap 1. The height direction 23 is shown in a cut view 25 of Fig. 1a. The cut is performed at a position of the indication member 17, such that the indication member is also shown in the cut view 25.

In the figure, another cut view 25a is shown, which shows a second embodiment 2 of the bistable automatic cable wrap 1. This second embodiment 2 does not comprise a curved shape 1a, but rather an angled shape 1b. The automatic cable wrap 1 of the angled shape 1b has a flat base 8 and two wing portions 10.

In the side view of Fig. 1b, a curvature 29 of the convex portion 21 is deliberately exaggerated for the purposes of illustration. The cable wrap 1 is stable in the extended state 3, as well as in the wound state 5.

Upon exertion of a force F in a direction counter to the height direction 23, the force F at least partially deforming the cable wrap 1, the cable wrap 1 automatically adopts the wound state 5, in which the curvature 29 of the cable wrap 1 in the extended state 3 is inverted as indicated in the cut view 25 of Fig. 2a. The curvature 29 of the cable wrap 1 has a concave portion 31 in the wound state 5.

In Fig. 2b, an overlap portion 33 is shown, wherein the cable wrap 1 may cover at maximum two turns 129 which is shown next to the figure. In the overlap portion 33 shown here, two ends 47 do partially enclose one another due to their concave portion 31. This is shown in circle 39 in Fig. 2b, which shows a cut along A-A.

In a preferred embodiment, the two concave portions 31 of a first end 47a and a second end 47b abut each other. Thus, a maximum diameter 49, indicated in the circle 39, corresponds to a single turn diameter 51 which is merely increased by a material thickness 53. This partial enclosing is only shown in the circle 39 of Fig. 2b.

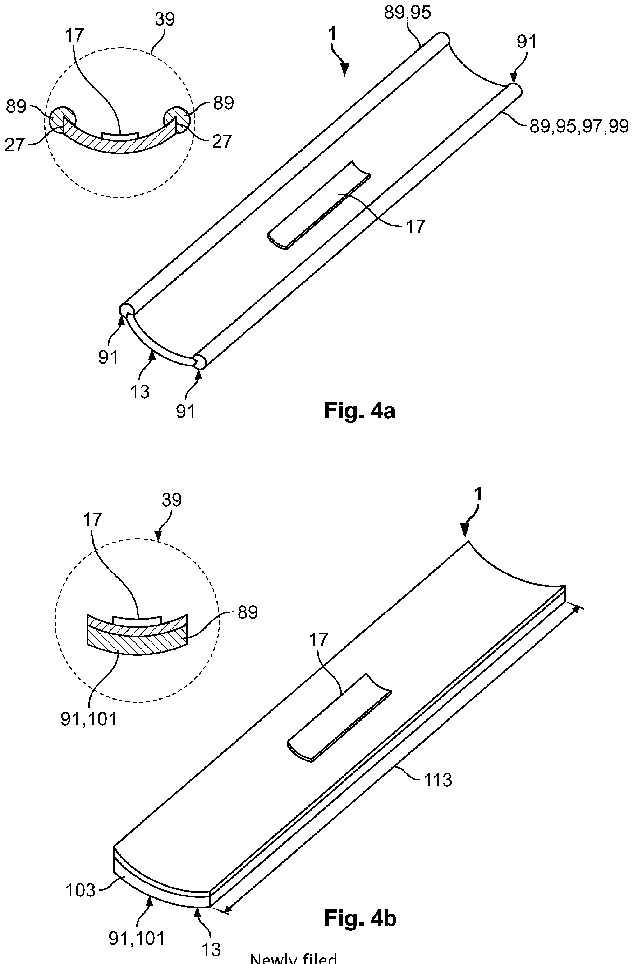

Figs. 3a, 3b and 3c show exemplary assemblies 54, which are respective applications of the inventive cable wrap 1. The assemblies 54 comprise at least one cable or wire 45 and a cable wrap 1 according to the invention, wherein the cable wrap 1 is wound around the at least one cable or wire 45, and wherein a length 113 (see Fig. 4b) of the cable wrap 1 corresponds at least to a circumference 115 of the assembly 54. It is to be noted that the circumference 115 is not limited to a circular shape, but may also be understood as the perimeter of a rectangular or a polygonal shaped cable 45.

Fig. 3a shows an inventive cable wrap 1 which is used for permanently marking the cable or wire 45.

The cable wrap 1 is in the wound state 5 and wound around the cable 45. On the front side 11, the indication member 17 is shown and visible to a user.

The back side 13 faces towards the cable 45 and comprises an adhesive material 55. In a first circle 39a, the adhesive material 55 is in an unheated state 57 and solely attached to the cable wrap 1. The cut view shown in the first circle 39a is a pre-assembled state 7 of the cable wrap 1.

When heat is applied to the cable wrap 1 shown in Fig. 3a, the adhesive material, in particular a hot melt adhesive 59, melts, fills remaining gaps 61 between the cable 45 and the cable wrap 1 and glues the cable wrap 1 to the cable 45. The assembled state 9 is shown in a second circle 39b.

In a third circle 39c, a further embodiment of the inventive cable wrap 1 is shown, which is used for patching the cable or wire 45.

The cable 45 comprises a damaged portion 63 in its insulation 65. The cable wrap 1 comprises an adhesive repair material 67 which behaves similarly as the hot melt adhesive 59 described above, wherein the adhesive repair material 67 is additionally configured to bond chemically and/or physically with the cable insulation 65.

The cable wrap 1 in circle 39c therefore repairs the insulation 65 and protects the cable 45 against environmental influences.

The cable wrap 1 may thus provide a waterproof connection 69, an electrically isolating connection 71, as well as a self laminating connection 73 and a self adhesive connection 75.

In Fig. 3b an inventive cable wrap 1 is wound around a plurality 77 of cables 45. The indication member 17 may thus be used for indicating a functionality of the plurality 77 of cables 45.

The cable wrap 1 shown in Fig. 3b may be applied as a reusable cable marker 78 or a permanently fixed cable wrap 1. In Figs. 3a and 3b, the overlap portion 33 is located behind the cable 45 or the plurality 77 of cables 45, and is thus not visible.

In Fig. 3c, the inventive cable wrap is shown in a further embodiment, in which a wrap portion 79 rather than the entire body 35 is wound around the cable 45.

The cable wrap 1 shown further comprises an indicator portion 81, which is embodied as a flat sheet part 83 and which comprises the indication member 17.

The flat sheet part 83 does remain in an extended state 3 and does not adopt a wound state 5, whereas the wrap portion 79, which is shown in the wound state 5 in Fig. 3c, may adopt both stable states 3, 5.

This embodiment has the advantage that a cable 45 may be recessed in a module 85 and still be properly marked. The cable 45 itself may not be visible to a user, whereas the indicator portion 81 may extend beyond the cubage 87 (indicated by a dashed line) of the module 85.

Figs. 4a and Fig. 4b show a second and third embodiment of the inventive cable wrap 1. Both embodiments comprise a surface 91 which increases friction 93 between cable wrap 1 and wire 45. Said surface 91 is at least partially embodied at the back side 13 of the cable wrap 1.

Such a surface 91 may be embodied as a partial cover member 89. Said partial cover member 89 may be an edge cover 95 which extends along the side edges 27 of the cable wrap 1 and may be made of rubber 97 or other suitable friction increasing material 99.

In Fig. 4b, the surface 91 is embodied as a surface cover 101 covering the entire back side 13 of the cable wrap 1. The surface cover 101 may comprise a foam material 103 which may, on the one hand, increase friction between the cable wrap 1 and the cable 45 and, on the other hand, adapt to a possibly uneven surface of the cable 45 or the plurality 77 of cables 45.

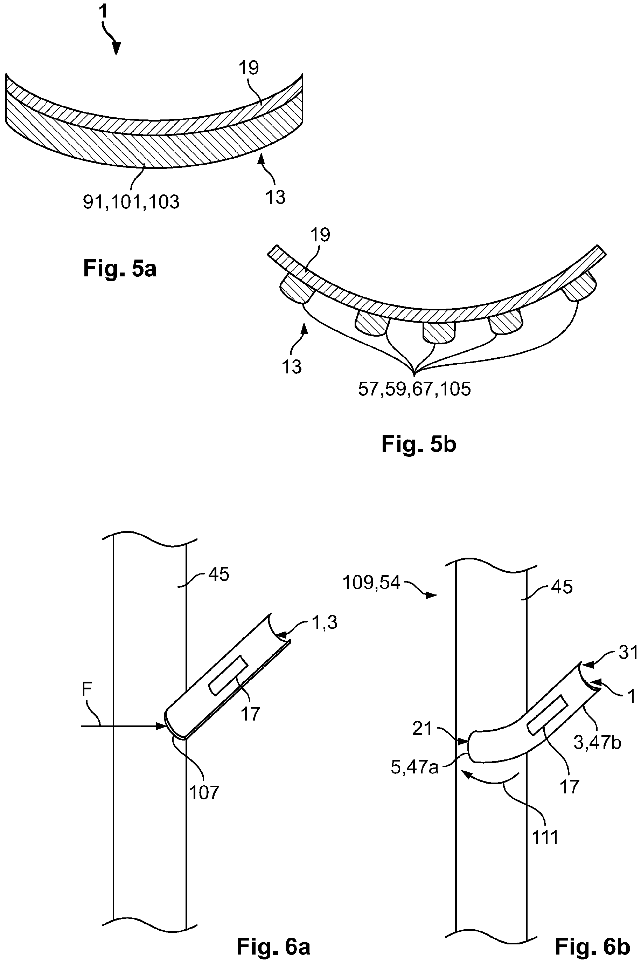

Fig. 5a shows a larger cross-section of the cable wrap 1 of Fig. 4b, and Fig. 5b shows a cut view of the embodiment of the inventive cable wrap 1 indicated in the first circle 39a of Fig. 3a.

The two embodiments are sheet metal parts 19, while the back side 13 is provided either with the foam material 103 or with the hot melt adhesive 59 or the adhesive repair material 67 in the unheated state 57. The hot melt adhesive 59 or the adhesive repair material 67 is provided in the form of drops 105 at the back surface 13.

Figs. 6a and 6b show two process steps for applying the inventive cable wrap 1 to a cable or wire 45 for obtaining the inventive assembly 54.

In the first step, the cable wrap 1 is in the extended state 3 and approached to the cable 45. When a force F is exerted from the cable 45 on a trigger portion 107 (the entire back side 13 may be the trigger portion 107), the cable wrap 1 adopts the wound state 5.

In Fig. 6b the intermediate state 109 of the cable wrap 1 is shown, in which only the first end 47a is in the wound state, while the second end 47b is still in the extended state 3.

However, this intermediate state 109 is not stable and the cable wrap 1 will automatically adopt the wound state 5, which is indicated by a winding direction 111 that indicates the movement performed by the cable wrap 1.

It is furthermore noted, that the first end 47a has a convex portion 21 and the second end 47b a concave portion 31.

After the step shown in Fig. 6b, the assembly 54 adopts a state similar to the one shown in Fig. 3a.

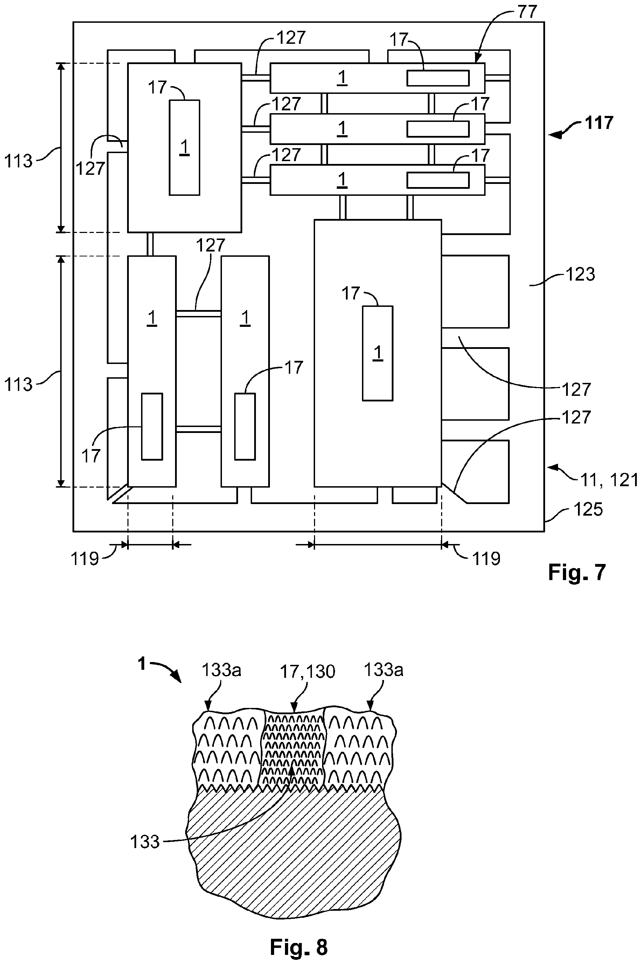

Finally, Fig. 7 shows an inventive kit 117 which comprises a plurality 77 of the inventive cable wraps 1 of different lengths 113 (only two lengths 113 are indicated) and/or widths 119.

Each of the cable wraps 1 may comprise an indication member 17, wherein the front side 11, which is visible in Fig. 7, may have a 121 which allows printing of the indication members 17.

The different cable wraps 1 are arranged in a matrix 123 that comprises a supporting frame 125 surrounding the matrix 123 and supporting bars 127 connecting the cable wraps 1 with each other and the cable wraps to the supporting frame 125. In Fig. 7, not all supporting bars 127 are indicated with a reference numeral.

The kit 117 may be adapted to be placed in a common printer (not shown) or labeling apparatus (also not shown) for modifying the indication member 17 such that information may be provided on said indication member 17. Possible processes include etching, engraving, deposition techniques or printing.

In Figs. 8 to 10, possible embodiments of the indication member 17 are shown. The figures each show a surface structure 133 whose dimensions are exaggerated for the purposes of explanation only. In Fig. 8, a section of the inventive bistable automatic cable wrap 1 is shown in a cut perspective view. The indication member 17 comprises a homogenously smooth surface 130 which is characterized by an even height (not shown) of the surface structure 133. The surface structure 133 is furthermore independent of the direction along which it is viewed on the bistable automatic cable wrap 1. Such a homogenously smooth surface 130 is in contrast to the untreated surface structure 133a which comprises an unevenly rough surface being unisotropic, i.e. dependent on the direction along which it is considered.

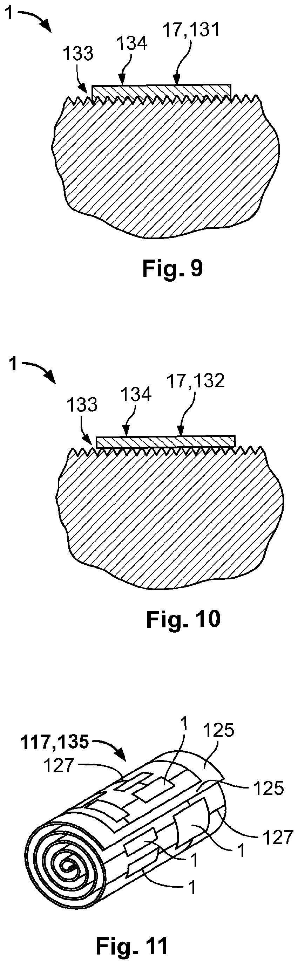

In Fig. 9, the bistable automatic cable wrap 1 is provided with a preparation coating 131 which is neatly attached to the surface structure 133 of the cable wrap 1. The preparation coating 131 is thus complementarily arranged along the surface structure 133, thereby forming a printing or labeling surface 134 having a higher and more homogenous adhesion to acrylic or water-based ink (not shown) than the surface structure 133.

Fig. 10 shows a printing or writing substrate 132 which is placed above the surface structure 133 of the cable wrap 1. The printing or writing substrate 132 also provides a printing or labeling surface 134 with similar properties to the one shown in Fig. 9. The printing or writing substrate 132 may, for instance, be glued to the surface structure 133 and is thus, in contrast to the preparation coating 131 of Fig. 9, not formed complementarily to the surface structure 133.

Fig. 11 shows another embodiment of the inventive kit 117.

The kit 117 is in the form of a roll product 135 suitable for roll-to-roll printing.

The structure of each layer of the roll product 135 is similar to the one shown in Fig. 7, i.e. it comprises different cable wraps 1 (not all of which are indicated using reference numerals), a supporting frame 125 and supporting bars 127.

### REFERENCE NUMERALS

- 1: bistable automatic cable wrap
- 1a: curved shape
- 1b: angled shape
- 2: second embodiment
- 3: extended state
- 4: longitudinal direction
- 5: wound state
- 6: stable state
- 7: pre-assembled state
- 8: flat base
- 9: assembled state
- 10: wing portion
- 11: front side
- 13: backside
- 15: encircled volume
- 17: indication member
- 17a: second embodiment of indication member
- 19: sheet metal part
- 21: convex portion
- 23: height direction
- 25: cut view
- 25a: another cut view
- 27: side edge
- 29: curvature
- 31: concave portion
- 33: overlap portion
- 35: body
- 37: structured body
- 39: circle
- 39a: first circle
- 39b: second circle
- 39c: third circle
- 41: metal
- 43: polymer
- 45: cable/wire
- 47: end
- 47a: first end
- 47b: second end
- 49: maximum diameter
- 51: single turn diameter
- 53: material thickness
- 54: assembly
- 55: adhesive material
- 57: unheated state
- 59: hot melt adhesive
- 61: gap
- 63: damaged portion
- 65: insulation
- 67: adhesive repair material
- 69: waterproof connection
- 71: electrical isolating connection
- 73: self laminating connection
- 75: self adhesive connection
- 77: plurality
- 78: reusable cable marker
- 79: wrap portion
- 81: indicator portion
- 83: flat sheet part
- 85: module
- 87: cubage
- 89: partial cover member
- 91: surface
- 93: friction
- 95: edge cover
- 97: rubber
- 99: friction increasing material
- 101: surface cover
- 103: foam material
- 105: drop
- 107: trigger portion
- 109: intermediate state
- 111: winding direction
- 113: length
- 115: circumference
- 117: kit
- 119: width
- 121: flatness
- 123: matrix
- 125: supporting frame
- 127: supporting bars
- 129: turn
- 130: homogenously smooth surface
- 131: preparation coating
- 132: printing or writing substrate
- 133: surface structure
- 133a: untreated surface structure
- 134: printing or labeling surface
- 135: roll product
- F: force

## Claims

1. Bistable automatic cable wrap (1) for being wrapped around a cable or wire (45), the bistable automatic cable wrap (1) having a stable extended state (3) in which it extends essentially along a longitudinal direction (4), wherein the bistable automatic cable wrap (1) automatically adopts a stable wound state, if deformed in the extended state (3), wherein the bistable automatic cable wrap (1) comprises a front side (11) and a backside (13) and wherein the back side (13) of the cable wrap (1) is located inside a circle/ a cylinder, which is formed by the cable wrap (1), wherein an adhesive material (55) is provided at the back side (13) of the bistable automatic cable wrap (1), and wherein the adhesive material (55) is an adhesive repair material (67), which is configured to bond chemically and/or physically with cable insulation (65).

2. Bistable automatic cable wrap (1) according to claim 1, wherein, on the front side (11) of the bistable automatic cable wrap (1), an indication member (17) is comprised for labeling the cable or wire (45) around which the bistable automatic cable wrap (1) is attachable.

3. Bistable automatic cable wrap (1) according to claim 2, wherein the indication member (17) comprises at least one of:
- a homogenously smooth surface (130);
- a preparation coating (131) which is adhesively attached to the indication member (17) and which provides a higher adhesion to liquid inks than non-porous materials of the bistable automatic cable wrap (1); or
- a layer of writing or printing substrate (132) which is adhesively fixed to the indication member (17) for absorbing water-based or acrylic inks.

4. Bistable automatic cable wrap (1) according to claim 2 or 3, wherein in the extended state (3) at least the front side (11) of the bistable automatic cable wrap (1) is essentially flat for printing on the indication member (17).

5. Bistable automatic cable wrap (1) according to claim 4, wherein the bistable automatic cable wrap (1) has a material thickness (53) between 0.1 and 0.7mm.

6. Bistable automatic cable wrap (1) according to any one of claims 1 to 5, wherein the extended (3) and wound state (5) are each repetitively and reversibly adoptable for applying the bistable automatic cable wrap (1) as reusable cable marker (78).

7. Bistable automatic cable wrap (1) according to any one of claims 1 to 6, wherein in the wound state (5) the bistable automatic cable wrap (1) is coiled up at most two turns (129) about the cable.

8. Bistable automatic cable wrap (1) according to any one of claims 1 to 7, wherein the back side (13) of the bistable automatic cable wrap (1) has a surface (91) increasing the friction (93) between the bistable automatic cable wrap (1) and the cable or wire (45).

9. Bistable automatic cable wrap (1) according to any one of claims 1 to 8, wherein the bistable automatic cable wrap (1) is made of a metal (41) and/or a polymer (43).

10. Kit (117) comprising a plurality (77) of bistable automatic cable wraps (1) according to any one of claims 1 to 9, wherein the bistable automatic cable wraps (1) have different lengths (113) and/or widths (119).

11. Assembly (54) comprising at least one cable or wire (45) and a bistable automatic cable wrap (1) according to any one of claims 1 to 9, wherein the bistable automatic cable wrap (1) is wound around the at least one cable or wire (45) and wherein the length (113) of the bistable automatic cable wrap (1) corresponds at least to the circumference (115) of the assembly (54).

12. Assembly (54) according to claim 11, wherein at least one of the list of the following connections is formed between the at least one cable or wire (45) and the bistable automatic cable wrap (1):
- a waterproof connection (69);
- an electrically isolating connection (71);
- a self laminating connection (73); and
- a self adhesive connection (75).

13. Use of a bistable automatic cable wrap (1) according to claim 1.

## Patentansprüche

1. Bistabiler automatischer Kabelbinder (1) zum Umwickeln eines Kabels oder Drahtes (45), wobei der bistabile automatische Kabelbinder (1) einen stabilen gestreckten Zustand (3) hat, in dem er sich im Wesentlichen in einer Längsrichtung (4) erstreckt, der bistabile automatische Kabelbinder (1) automatisch einen stabilen gewickelten Zustand einnimmt, wenn er in dem gestreckten Zustand (3) verformt wird, der bistabile automatische Kabelbinder (1) eine Vorderseite (11) und eine Rückseite (13) umfasst und sich die Rückseite (13) des Kabelbinders (1) innerhalb eines Kreises/Zylinders befindet, der durch den Kabelbinder (1) gebildet wird, an der Rückseite (13) des bistabilen automatischen Kabelbinders (1) ein Klebematerial (55) vorhanden ist und das Klebematerial (55) ein Klebematerial (67) für Reparaturzwecke ist, das zum chemischen und/oder physikalischen Binden an Kabelisolierung ausgeführt ist.

2. Bistabiler automatischer Kabelbinder (1) nach Anspruch 1, wobei an der Vorderseite (11) des bistabilen automatischen Kabelbinders (1) ein Anzeigeelement (17) zum Kennzeichnen des Kabels oder Drahtes (45) enthalten ist, um den herum der bistabile automatische Kabelbinder (1) angebracht werden kann.

3. Bistabiler automatischer Kabelbinder (1) nach Anspruch 2, wobei das Anzeigeelement (17) umfasst:
eine homogene glatte Oberfläche (130);
eine Vorbereitungs-Beschichtung (131), die haftend an dem Anzeigeelement (17) angebracht ist und die eine höhere Haftung für flüssige Druckfarben bietet als nicht-poröse Materialien des bistabilen automatischen Kabelbinders (1); oder
eine Schicht aus Substrat (132) zum Beschreiben oder Bedrucken, die an dem Anzeigeelement (17) haftend befestigt ist, um Tinten auf Wasser- oder Acryl-Basis zu absorbieren.

4. Bistabiler automatischer Kabelbinder (1) nach Anspruch 2 oder 3, wobei in dem gestreckten Zustand (3) wenigstens die Vorderseite (11) des bistabilen automatischen Kabelbinders (1) zum Drucken auf das Anzeigeelement (17) im Wesentlichen flach ist.

5. Bistabiler automatischer Kabelbinder (1) nach Anspruch 4, wobei der bistabile automatische Kabelbinder (1) eine Materialstärke (53) zwischen 0,1 und 0,7 mm hat.

6. Bistabiler automatischer Kabelbinder (1) nach einem der Ansprüche 1 bis 5, wobei der gestreckte Zustand (3) und der gewickelte Zustand (5) jeweils wiederholbar und reversibel hergestellt werden können, um den bistabilen automatischen Kabelbinder (1) als wiederverwendbare Kabel-Markierungseinrichtung (78) einzusetzen.

7. Bistabiler automatischer Kabelbinder (1) nach einem der Ansprüche 1 bis 6, wobei in dem gewickelten Zustand (5) der bistabile automatische Kabelbinder (1) bis zu maximal zwei Windungen (129) um das Kabel herum gewickelt ist.

8. Bistabiler automatischer Kabelbinder (1) nach einem der Ansprüche 1 bis 7, wobei die Rückseite (13) des bistabilen automatischen Kabelbinders (1) eine Oberfläche (91) hat, die die Reibung (93) zwischen dem bistabilen automatischen Kabelbinder (1) und dem Kabel oder Draht (45) erhöht.

9. Bistabiler automatischer Kabelbinder (1) nach einem der Ansprüche 1 bis 8, wobei der bistabile automatische Kabelbinder (1) aus einem Metall (41) und/oder einem Polymer (43) besteht.

10. Bausatz (117), der eine Vielzahl (77) bistabiler automatischer Kabelbinder (1) nach einem der Ansprüche 1 bis 9 umfasst, wobei die bistabilen automatischen Kabelbinder (1) unterschiedliche Längen (113) und/oder Breiten (119) haben.

11. Baugruppe (54), die wenigstens ein Kabel oder einen Draht (45) sowie einen bistabilen automatischen Kabelbinder (1) nach einem der Ansprüche 1 bis 9 umfasst, wobei der bistabile automatische Kabelbinder (1) um das/den wenigstens eine/n Kabel oder Draht (45) herum gewickelt ist und die Länge (113) des bistabilen automatischen Kabelbinders (1) wenigstens dem Umfang (115) der Baugruppe (54) entspricht.

12. Baugruppe (54) nach Anspruch 11, wobei wenigstens eine aus der Liste der folgenden Verbindungen zwischen dem wenigstens einen Kabel oder Draht (45) und dem bistabilen automatischen Kabelbinder (1) hergestellt wird:
eine wasserdichte Verbindung (69);
eine elektrisch isolierende Verbindung (71);
eine selbstlaminierende Verbindung (73); und
eine selbstklebende Verbindung (75).

13. Einsatz eines bistabilen automatischen Kabelbinders (1) nach Anspruch 1.

## Revendications

1. Recouvrement de câble automatique bistable (1) destiné à être enroulé autour d'un câble ou d'un fil (45), le recouvrement de câble automatique bistable (1) possédant un état étendu stable (3) dans lequel il se déploie essentiellement le long d'une direction longitudinale (4), le recouvrement de câble automatique bistable (1) comprenant automatiquement un état enroulé stable, s'il est déformé dans l'état étendu (3), le recouvrement de câble automatique bistable (1) comprenant un côté avant (11) et un côté arrière (13), le côté arrière (13) du recouvrement de câble (1) étant situé à l'intérieur d'un cercle ou d'un cylindre qui est formé par le recouvrement de câble (1), un matériau adhésif (55) étant disposé du côté arrière (13) du recouvrement de câble automatique bistable (1), et le matériau adhésif (55) étant un matériau adhésif de réparation (67) qui est configuré pour une liaison chimique et/physique avec une isolation de câble (65).

2. Recouvrement de câble automatique bistable (1) selon la revendication 1, dans lequel, sur le côté avant (11) du recouvrement de câble automatique bistable (1), un élément d'indication (17) est compris afin d'étiqueter le câble ou le fils (45) autour duquel peut être fixé le recouvrement de câble automatique bistable (1).

3. Recouvrement de câble automatique bistable (1) selon la revendication 2, dans lequel l'élément d'indication (17) comprend au moins un élément parmi :
- une surface lisse et homogène (130),
- un revêtement de préparation (131) qui est fixé de manière adhésive à l'élément d'indication (17) et qui procure une adhérence supérieure aux encres liquides que des matériaux non poreux du recouvrement de câble automatique bistable (1), ou
- une couche de substrat d'écriture ou d'impression (132) qui est fixée de manière adhésive à l'élément d'indication (17) afin d'absorber des encres à base d'eau ou acryliques.

4. Recouvrement de câble automatique bistable (1) selon la revendication 2 ou la revendication 3, dans lequel, à l'état étendu (3), au moins le côté avant (11) du recouvrement de câble automatique bistable (1) est pratiquement plat en vue d'une impression sur l'élément d'indication (17).

5. Recouvrement de câble automatique bistable (1) selon la revendication 4, le recouvrement de câble automatique bistable (1) présentant une épaisseur matière (53) comprise entre 0,1 mm et 0,7 mm.

6. Recouvrement de câble automatique bistable (1) selon l'une quelconque des revendications 1 à 5, dans lequel l'état étendu (3) et l'état enroulé (5) peuvent être choisis de manière répétitive et réversible pour utiliser le recouvrement de câble automatique bistable (1) en tant que marqueur réutilisable de câble (78).

7. Recouvrement de câble automatique bistable (1) selon l'une quelconque des revendications 1 à 6, dans lequel, à l'état enroulé (5), le recouvrement de câble automatique bistable (1) est bobiné sur au moins deux tours (129) autour du câble.

8. Recouvrement de câble automatique bistable (1) selon l'une quelconque des revendications 1 à 7, dans lequel le côté arrière (13) du recouvrement de câble automatique bistable (1) présente une surface (91) qui augmente le frottement (93) entre le recouvrement de câble automatique bistable (1) et le câble ou le fil (45).

9. Recouvrement de câble automatique bistable (1) selon l'une quelconque des revendications 1 à 8, le recouvrement de câble automatique bistable (1) étant constitué d'un métal (41) et/ou d'un polymère (43).

10. Nécessaire (117) comprenant une pluralité (77) de recouvrements de câbles automatiques bistables (1) conformes à l'une quelconque des revendications 1 à 9, dans lequel les recouvrements de câbles automatiques bistables (1) présentent des longueurs (113) et/ou largeurs (119) différentes.

11. Assemblage (54) comprenant au moins un câble ou un fil (45) et un recouvrement de câble automatique bistable (1) conforme à l'une quelconque des revendications 1 à 9, dans lequel le recouvrement de câble automatique bistable (1) est bobiné autour du ou des câbles ou fils (45), et où la longueur (113) du recouvrement de câble automatique bistable (1) correspond au moins à la circonférence (115) de l'assemblage (54).

12. Assemblage (54) selon la revendication 11, dans lequel au moins l'une de la liste des connexions suivantes est formée entre le ou les câbles ou fils (45) et le recouvrement de câble automatique bistable (1) :
- une connexion étanche (69),
- une connexion électriquement isolante (71),
- une connexion auto stratifiante (73), et
- une connexion auto adhésive (75).

13. Utilisation d'un recouvrement de câble automatique bistable (1) conforme à la revendication 1.
